# DEMANDE DE BREVET EUROPEEN

(11) **EP 4 559 825 A1**
(43) Date de publication de la demande: **28.05.2025**
(21) Numéro de dépôt: 24213043.3
(22) Date de dépôt: 14.11.2024
(51) Int. Cl.: B65B 35/04, B65B 35/18, B65B 35/38, B65B 35/58, B25J 9/00, B25J 15/00, B25J 15/06, B65B 5/06, B65B 5/10, B65B 21/06, B65B 21/20, B65B 57/14, B65B 61/20, B65B 21/02

(54) **INSTALLATION DE CONDITIONNEMENT AUTOMATIQUE DE TUBES COMPRESSIBLES DANS UN EMBALLAGE**

(30) Priorité: 21.11.2023 FR 2312822
(71) Demandeur: Siléane, 42000 Saint-Etienne (FR)
(72) Inventeur: REYNARD, Julien, 42000 SAINT-ETIENNE (FR)
(74) Mandataire: Cabinet Laurent & Charras

(57) **Abrégé**

Installation (1) de conditionnement automatique de tubes (2) compressibles dans un emballage (3), remarquable en ce qu'elle comporte au moins une unité comprenant :
- au moins un premier système polyarticulé (5) comportant un préhenseur accouplé avec un outil de prise unitaire (6) équipé d'au moins une ventouse et configuré pour saisir, un par un et en association avec un premier système de vision (7), des tubes (2) et les déposer à plat, en association avec un deuxième système de vision (8), sur un plateau (9) intermédiaire ;
- au moins un plateau (9) intermédiaire comprenant au moins une rangée (12) de cales ajustées à la forme des tubes (2) et accolées latéralement les unes aux autres pour supporter les tubes (2) à plat côte à côte et dans le même sens ;
- au moins un deuxième système polyarticulé (10) comportant un préhenseur accouplé avec un outil de prise simultanée (11) équipé d'une rangée de ventouses (16) et configuré pour saisir simultanément l'ensemble des tubes (2) depuis le plateau (9) intermédiaire et à les conditionner à plat dans un emballage (3).

## Description

### Domaine technique

L'invention se rapporte au secteur technique du conditionnement automatique de tubes compressibles, par exemple des tubes de cosmétique, dans des emballages, par exemple des caisses en carton.

Par tubes compressibles, on entend le type de tube déformable à presser pour délivrer son contenu, généralement utilisé en cosmétique et connu sous l'expression anglaise « squeeze tube ».

Ce type de tube comprend un corps tubulaire réalisé dans un matériau souple et présentant une première extrémité ouverte équipée d'une tête de distribution, et une deuxième extrémité fermée par une ligne de soudure. L'ensemble définit un volume intérieur destiné à contenir un produit, par exemple cosmétique. La tête de distribution présente classiquement un col sur lequel vient se fixer un bouchon. La deuxième extrémité est généralement fermée après remplissage du produit par pincement de ladite cloison tubulaire et soudure.

### Art antérieur

Il est connu de l'art antérieur de conditionner automatiquement des tubes compressibles dans une caisse en carton, avec chaque tube en position verticale.

Le conditionnement est réalisé par des systèmes polyarticulés configurés pour saisir les tubes dans un vrac linéaire et les déposer verticalement dans un carton, les tubes étant séparés et maintenus par des croisillons.

Cependant, il ressort que la vitesse d'exécution et l'encombrement du conditionnement des tubes pourraient être largement améliorés.

### Exposé de l'invention

L'un des buts de l'invention est de fournir une installation de conditionnement automatique de tubes compressibles dans un emballage, notamment de forme parallélépipédique, qui permet d'optimiser la rapidité d'exécution et l'encombrement du conditionnement.

À cet effet, il a été mis au point une installation de conditionnement automatique de tubes compressibles dans un emballage, remarquable en ce qu'elle comporte au moins une unité comprenant :
- au moins un premier système polyarticulé comportant un préhenseur accouplé avec un outil de prise unitaire équipé d'au moins une ventouse et configuré pour saisir, un par un et en association avec un premier système de vision, des tubes et les déposer à plat, en association avec un deuxième système de vision, sur un plateau intermédiaire ;
- au moins un plateau intermédiaire comprenant au moins une rangée de cales ajustées à la forme des tubes et accolées latéralement les unes aux autres pour supporter les tubes à plat côte à côte et dans le même sens ;
- au moins un deuxième système polyarticulé comportant un préhenseur accouplé avec un outil de prise simultanée équipé d'une rangée de ventouses et configuré pour saisir simultanément l'ensemble des tubes depuis le plateau intermédiaire et les conditionner à plat dans un emballage.

Dans ces conditions, les tubes sont dorénavant conditionnés à plat dans l'emballage, de sorte que l'encombrement est très nettement réduit, avec une rapidité d'exécution optimisée.

Selon une forme de réalisation particulière, la rangée de ventouses de l'outil de prise simultanée comprend des paires de ventouses, améliorant ainsi l'efficacité de prise du système polyarticulé.

Avantageusement, le plateau comprend au moins deux rangées de cales parallèles, destinées à supporter les tubes dans des sens opposés l'une par rapport à l'autre et en quinconce, et l'outil de prise simultanée comprend deux rangées parallèles de ventouse, rapprochables de l'une de l'autre.

De cette manière, lorsque le deuxième système polyarticulé saisit l'ensemble des tubes pour les conditionner à plat dans l'emballage, les rangées de ventouses sont rapprochées l'une de l'autre pour engager les tubes d'une rangée entre les tubes de l'autre rangée afin de diminuer très nettement l'encombrement. En pratique le conditionnement à plat permet de réduire l'encombrement d'un facteur trois.

Selon une forme de réalisation particulière, le plateau comprend au moins deux cales par tube, notamment une pour chaque tube, dont une première cale avec une empreinte, par exemple semi-circulaire ou en V ou toute autre forme appropriée, pour recevoir le col du tube, et une deuxième cale avec une pente inclinée pour recevoir en appui une extrémité opposée du tube.

De cette manière, chaque tube est maintenu d'une manière optimale et avec précision pour faciliter l'opération de prise simultanée. La pente inclinée permet de maintenir chaque tube avec une inclinaison de son extrémité soudée de sorte qu'après le conditionnement dans l'emballage, les extrémités des tubes sont en partie en chevauchement l'une sur l'autre, ce qui est communément appelé un conditionnement par tuilage.

Selon une forme de réalisation particulière, les cales sont orientées de sorte à recevoir les tubes sur le plateau de manière inclinée par rapport à la rangée de cales, selon un angle compris entre 80° et 90°, de préférence85°. Bien entendu ces valeurs dépendent du nombre de tubes à conditionner par rapport à une longueur donnée de l'emballage.

Ces valeurs permettent d'optimiser l'encombrement et de diminuer le risque de conflit entre les tubes lors du rapprochement des rangées de ventouses.

Afin d'optimiser davantage l'encombrement des tubes conditionnés à plat, par tuilage, la pente de la deuxième cale est inclinée par rapport au plan du plateau d'un angle compris entre 50° et 60°, par exemple 55°.

Afin d'éviter le défaut de positionnement d'un tube d'assurer la stabilité des tubes positionnés entre les cales, la pente de la deuxième cale présente une portion interne chanfreinée, notamment pour épouser le corps du tube.

Afin d'augmenter les cadences de conditionnement, l'unité comprend au moins deux plateaux intermédiaires, chacun positionné dans le champ d'action d'un système polyarticulé, et mobiles alternativement entre le premier et le deuxième système polyarticulé.

Dans cette configuration, cela permet de réaliser un travail en temps masqué. Notamment, lorsque le deuxième système polyarticulé saisit simultanément l'ensemble des tubes depuis l'un des plateaux pour les conditionner dans l'emballage, le premier système polyarticulé dépose de nouveaux tubes sur l'autre plateau.

De préférence, la ventouse de l'outil de prise unitaire est pivotante autour d'un axe vertical et autour d'un axe horizontal.

Dans ces conditions, cela permet de faciliter l'orientation des tubes, surtout lorsqu'il s'agit de les déposer sur un plateau avec deux rangées, c'est-à-dire avec une rangée de tubes dans un sens et une rangée de tubes dans un sens opposé.

Selon une forme de réalisation particulière, la ventouse de cet outil de prise unitaire est montée dans un sabot destiné à venir coiffer le tube lors de sa prise.

De cette manière, l'opération de prise est stable, le sabot agit comme un gabarit qui vient fixer la position du tube afin de faciliter sa pose sur le plateau.

### Brève description des dessins

[Fig. 1] est une représentation schématique en perspective d'une installation de conditionnement selon l'invention.
[Fig. 2] est une perspective d'un plateau comprenant deux rangées de cales pour la réception des tubes, avec quelques tubes positionnés sur celui-ci.
[Fig. 3] est une vue similaire à celle de la figure 2, vue de dessus.
[Fig. 4] est une vue de détail sur les cales destinées à supporter les extrémités soudées des tubes.
[Fig. 5] est une vue en perspective de l'agencement de deux plateaux intermédiaires mobiles alternativement entre les systèmes polyarticulés.
[Fig. 6] est une vue du deuxième système polyarticulé prêt à saisir simultanément l'ensemble des tubes depuis un plateau intermédiaire.
[Fig. 7] est une vue similaire à celle de 6, illustrant en perspective l'outil de prise simultanée saisissant simultanément l'ensemble des tubes.
[Fig. 8] est une vue de dessous de l'outil de prise simultanée, illustrant les rangées de ventouses écartées l'une de l'autre.
[Fig. 9] est une vue similaire à celle de la figure 7, les rangées de ventouses étant rapprochées l'une de l'autre pour diminuer l'encombrement du conditionnement des tubes, et réaliser le tuilage en quinconce.
[Fig. 10] est une vue similaire à celle de la figure 8, les rangées de ventouses étant rapprochées l'une de l'autre.
[Fig. 11] est une vue de l'outil de prise simultanée lors du dépôt des tubes à plat dans un emballage.
[Fig. 12] illustre en perspective le premier système polyarticulé saisissant un tube.
[Fig. 13] est une vue en perspective de l'outil de prise unitaire saisissant un tube.

### Description détaillée de l'invention

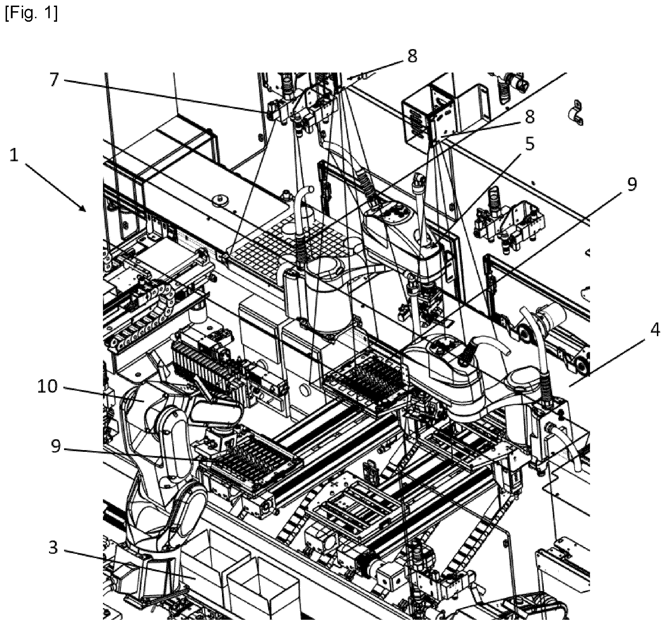

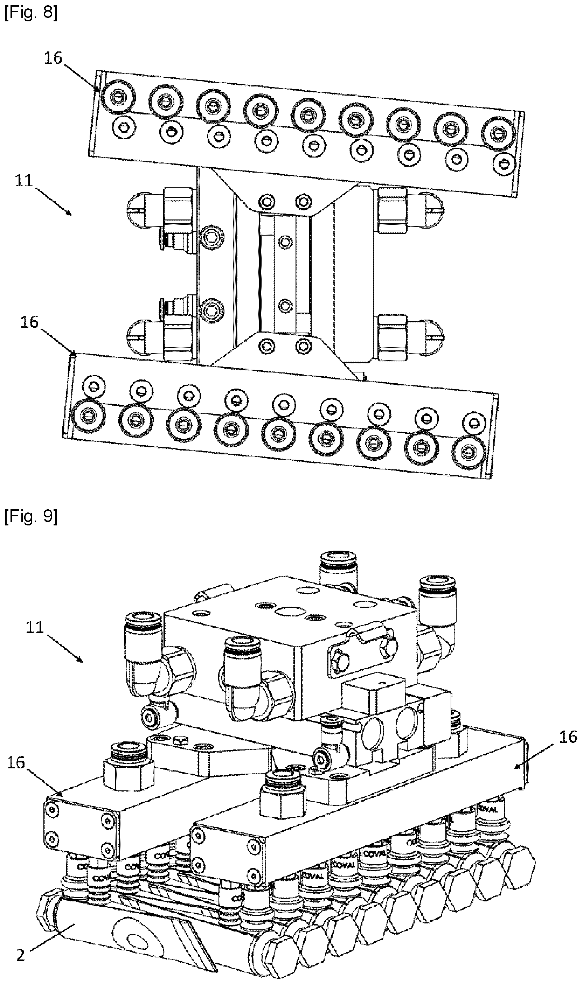

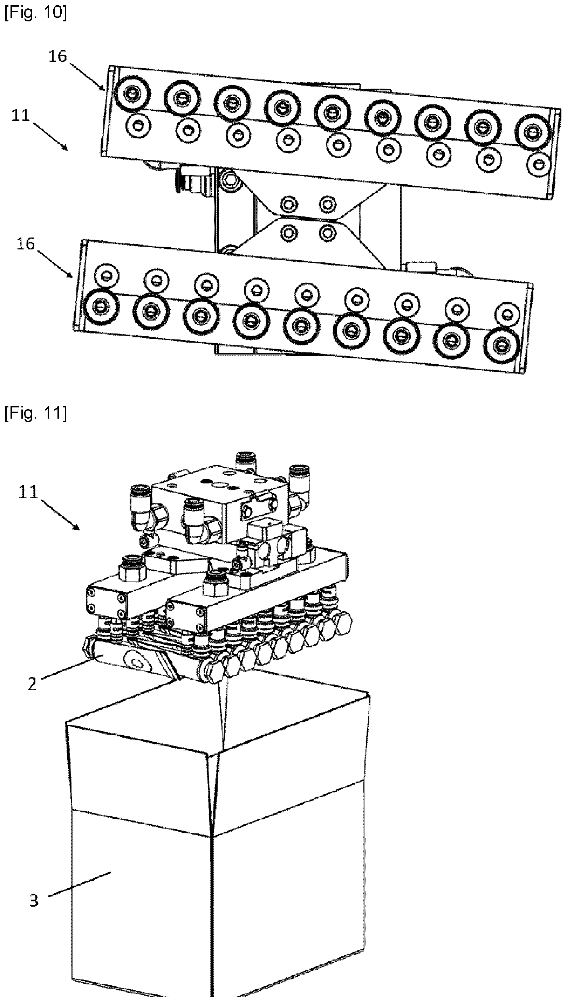

En référence aux figures 1 à 13, l'invention concerne une installation (1) de conditionnement automatique de tubes (2) compressibles dans un emballage (3), notamment par tuilage, c'est-à-dire que les tubes (2) sont positionnés à plats et se chevauchent en partie les uns les autres, comme on peut l'apercevoir sur les figures.

En pratique, les tubes (2) sont présentés et orientés aléatoirement dans un vrac linéaire et acheminés au travers de l'installation (1) par au moins un convoyeur (4), dans le but de les saisir automatiquement, un par un, en vue de leur conditionnement dans l'emballage (3).

A cet effet, l'installation (1) comporte au moins une unité, et de préférence une pluralité d'unités positionnées les unes à la suite des autres et devant lesquelles le convoyeur (4) achemine le vrac linéaire de tubes (2).

Chaque unité comprend un premier système polyarticulé (5) comportant un préhenseur accouplé avec un outil de prise unitaire (6) configuré pour saisir, un par un et en association avec un premier système de vision (7), des tubes (2) sur le convoyeur (4) pour les déposer ensuite à plat, en association avec un deuxième système de vision (8), sur un plateau (9) intermédiaire.

L'unité comprend également un deuxième système polyarticulé (10) comportant un préhenseur accouplé avec un outil de prise simultanée (11) configuré pour saisir simultanément l'ensemble des tubes (2) disposés sur le plateau (9) intermédiaire, et à les conditionner à plat dans l'emballage (3).

Pour ce faire, et d'une manière connue, l'installation (1) comprend une unité de contrôle (non représentée) qui exécute un programme d'ordinateur programmé pour définir, en association avec les systèmes de vision (7, 8), des zones de prise sur les tubes (2) et des zones de dépôt sur le plateau (9), et programmer pour envoyer des consignes de pilotage correspondantes au système polyarticulé.

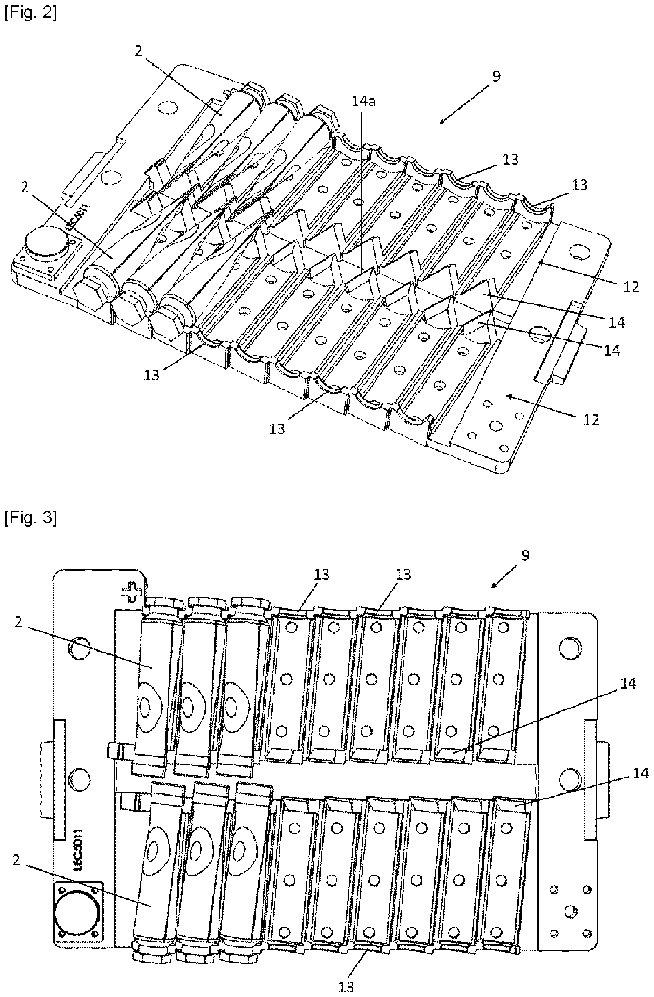

En référence aux figures 2 à 4, le plateau (9) intermédiaire comprend au moins une rangée (12) de cales (13, 14), et de préférence deux rangées (12) parallèles, avec des cales ajustées à la forme des tubes (2) et accolées latéralement les unes aux autres pour supporter les tubes (2) à plat et côte à côte. Les rangées de cales supportent les tubes (2) dans des sens opposés et en quinconce.

En pratique, le plateau (9) comprend deux cales par tube, dont une première cale (13) avec une empreinte par exemple semi-circulaire pour recevoir le col du tube, et une deuxième cale (14) opposée, avec une pente inclinée (14a) pour recevoir en appui une extrémité opposée du tube.

En référence à la figure 3, les cales (13, 14) sont orientées pour recevoir les tubes (2) sur le plateau (9) de manière inclinée par rapport à la rangée (12) de cales, et selon un angle compris entre 80° et 90°, de préférence 85°.

En référence à la figure 2, la pente (14a) de la deuxième cale est inclinée par rapport au plan du plateau (9) selon un angle compris entre 50° et 60°, par exemple 55°.

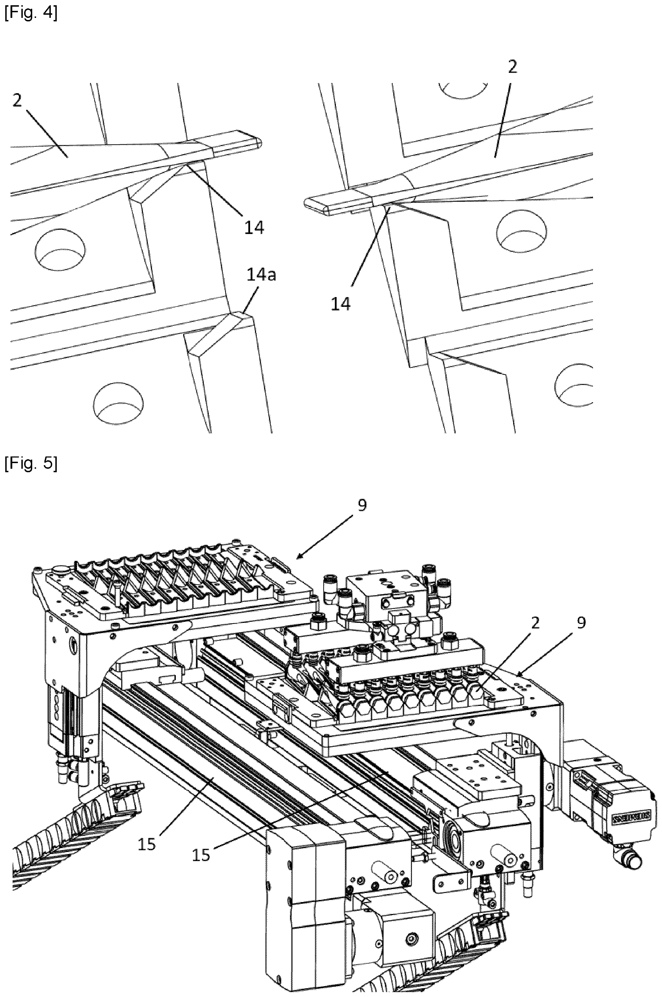

En référence à la figure 4, la pente (14a) de la deuxième cale présente une portion interne chanfreinée afin d'épouser au mieux la forme du tube à supporter.

En référence à la figure 5, chaque unité comprend de préférence deux plateaux (9) intermédiaires, chacun positionné dans le champ d'action de l'un des systèmes polyarticulés, mobiles alternativement entre le premier et le deuxième système polyarticulé (5, 10).

Les plateaux (9) sont par exemple montés coulissants chacun sur un rail (15), les deux rails (15) étant côte à côte et parallèle l'un de l'autre, et les plateaux (9) étant par exemple déportés pour coulisser le long d'un même axe à des niveaux différents pour pouvoir passer d'une position à une autre, sans conflit.

Cette conception permet aux deux systèmes polyarticulés (5, 10) de travailler en temps masqué, lorsque le premier système polyarticulé (5) dépose les tubes (2) un à un sur le plateau (9), le deuxième système polyarticulé (10) saisit l'ensemble des tubes (2) depuis le deuxième plateau (9) pour les conditionner dans l'emballage (3).

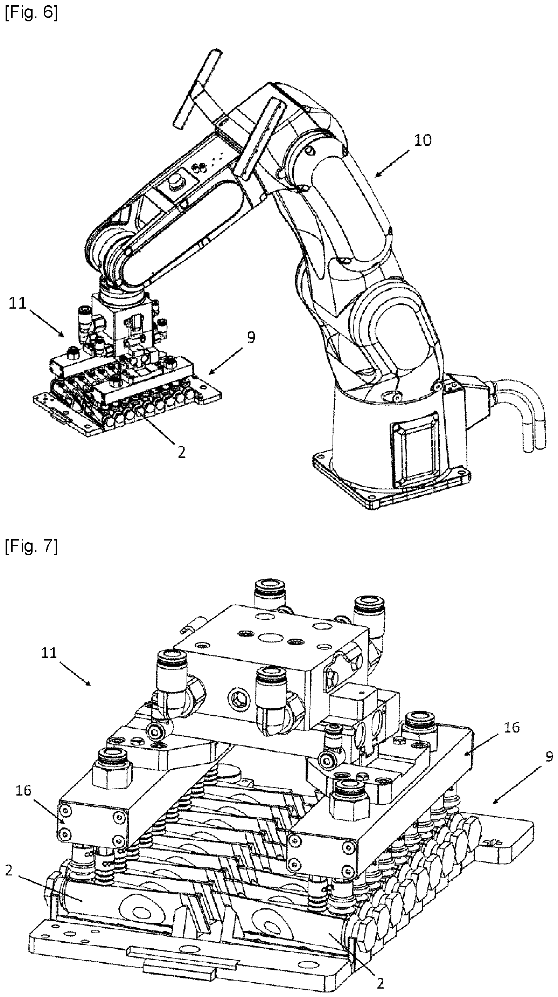

En référence aux figures 7 à 11, l'outil de prise simultanée (11) du deuxième système polyarticulé (10) est équipé d'au moins une rangée de ventouses (16), et de deux rangées de ventouses (16) lorsque le plateau (9) comprend deux rangées (12) de cales. Les rangées de ventouses (16) sont donc complémentaires aux rangées (12) de cales du plateau (9), les ventouses étant espacées les unes des autres d'une distance correspondant à la distance entre les tubes (2) posés sur le plateau (9). De préférence, et afin de maximiser l'opération de prise, la rangée de ventouses (16) comprend des paires de ventouses.

Les deux rangées (16) parallèles de ventouses sont rapprochables l'une de l'autre par tous moyens appropriés, par exemple au moyen de liaisons glissières.

De cette manière, après avoir saisi simultanément l'ensemble des tubes (2) disposés à plat sur le plateau (9), le deuxième système polyarticulé (10) est piloté pour rapprocher les rangées de ventouses (16) l'une de l'autre de sorte à engager les tubes (2) d'une rangée avec les tubes (2) de l'autre rangée pour réaliser un tuilage en quinconce des tubes (2).

Ensuite, l'ensemble des tubes (2) rapprochés est disposé à plat dans un emballage (3) carton par exemple.

De préférence, une feuille de carton est ensuite posée sur ce plan de tubes, pour en recevoir un autre, et ainsi de suite jusqu'à remplissage du carton.

Une fois le carton rempli, il est évacué et fermé, et un nouveau carton vide est positionné.

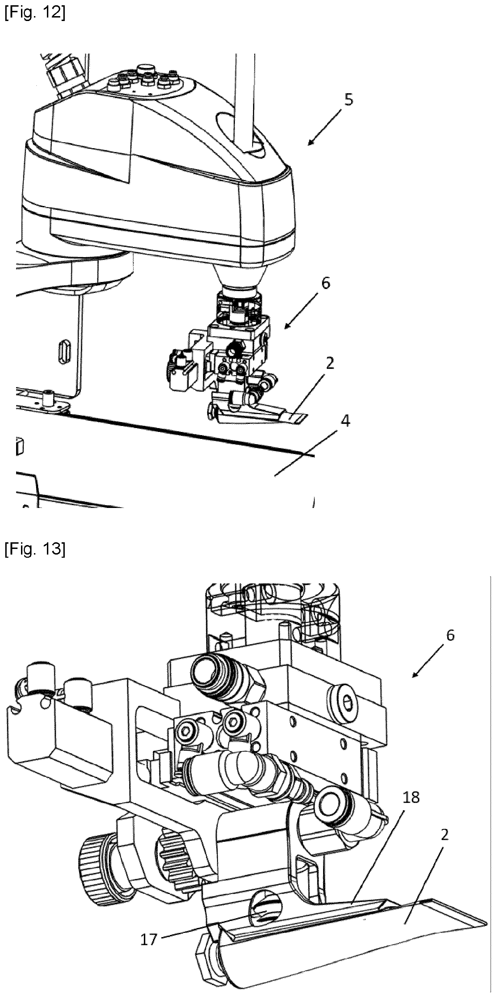

En référence aux figures 12 et 13, l'outil de prise unitaire (6) du premier système polyarticulé (5) comprend de préférence au moins une ventouse (17) qui peut pivoter autour d'un axe vertical et autour d'un axe horizontal, selon toute technique appropriée bien connue de l'homme du métier, par exemple par l'intermédiaire d'un pignon solidaire en pivotement avec la ventouse (17), monté sur une crémaillère déplaçable par un vérin pour faire pivoter la ventouse.

De cette manière, le deuxième système polyarticulé (10) peut aisément déposer dans un sens, puis dans un autre, les différents tubes (2) sur les cales des deux rangées du plateau (9).

Selon une forme de réalisation particulière, la ventouse (17) de l'outil de prise unitaire (6) est montée dans un sabot (18), qui présente une empreinte complémentaire à celle d'un tube positionné à plat et destiné à venir coiffer le tube lors de sa prise afin de fixer correctement la position du tube pour une dépose parfaite sur le plateau (9).

Il ressort de ce qui précède que l'installation (1) de l'invention permet de réaliser un conditionnement automatique, notamment par tuilage à plat, de tubes (2) compressibles avec un encombrement et une rapidité d'exécution optimisés.

## Revendications

1. Installation (1) de conditionnement automatique de tubes (2) compressibles dans un emballage (3), ***caractérisée* en ce qu'**elle comporte au moins une unité comprenant :
- au moins un premier système polyarticulé (5) comportant un préhenseur accouplé avec un outil de prise unitaire (6) équipé d'au moins une ventouse (17) et configuré pour saisir, un par un et en association avec un premier système de vision (7), des tubes (2) et les déposer à plat, en association avec un deuxième système de vision (8), sur un plateau (9) intermédiaire ;
- au moins un plateau (9) intermédiaire comprenant au moins une rangée (12) de cales ajustées à la forme des tubes (2) et accolées latéralement les unes aux autres pour supporter les tubes (2) à plat côte à côte et dans le même sens ;
- au moins un deuxième système polyarticulé (10) comportant un préhenseur accouplé avec un outil de prise simultanée (11) équipé d'une rangée de ventouses (16) et configuré pour saisir simultanément l'ensemble des tubes (2) depuis le plateau (9) intermédiaire et à les conditionner à plat dans un emballage (3).

2. Installation (1) selon la revendication 1, ***caractérisée* en ce que** la rangée de ventouses (16) comprend des paires de ventouses.

3. Installation (1) selon l'une des revendications précédentes, ***caractérisée* en ce que** le plateau (9) comprend au moins deux rangées (12) de cales parallèles, destinées à supporter les tubes (2) dans des sens opposées l'une par rapport à l'autre et en quinconce, et l'outil de prise simultanée (11) comprend deux rangées (16) parallèles de ventouses, rapprochables l'une de l'autre.

4. Installation (1) selon l'une des revendications précédentes, ***caractérisée* en ce que** le plateau (9) comprend deux cales 13, 14) par tube, une pour chaque extrémité, dont une première cale (13) avec une empreinte pour recevoir le col du tube, et une deuxième cale (14) avec une pente inclinée (14a) pour recevoir en appui une extrémité opposée du tube.

5. Installation (1) selon l'une des revendications précédentes, ***caractérisée* en ce que** les cales (13, 14) sont orientées pour recevoir les tubes (2) sur le plateau (9) de manière inclinée par rapport à la rangée (12) de cales, selon un angle compris entre 80° et 90°.

6. Installation (1) selon l'une des revendications 4 à 5, ***caractérisée* en ce que** la pente (14a) de la deuxième cale (14) est inclinée par rapport au plan du plateau (9) d'un angle compris entre 50° et 60°, par exemple 55°.

7. Installation (1) selon l'une des revendications 4 à 6, ***caractérisée* en ce que** la pente (14a) de la deuxième cale (14) présente une portion interne chanfreinée.

8. Installation (1) selon l'une de revendications précédentes, ***caractérisée* en ce que** l'unité comprend au moins deux plateaux (9) intermédiaires, chacun positionné dans le champ d'action de l'un des systèmes polyarticulés, et mobiles alternativement entre le premier et le deuxième système polyarticulé (10).

9. Installation (1) selon l'une des revendications précédentes, ***caractérisée* en ce que** la ventouse (17) de l'outil de prise unitaire (6) est pivotante autour d'un axe vertical et autour d'un axe horizontal.

10. Installation (1) selon la revendication 9, ***caractérisée* en ce que** la ventouse (17) est montée dans un sabot (18) destiné à venir coiffer le tube lors de sa prise.
